# EUROPÄISCHE PATENTANMELDUNG

(11) **EP 3 840 190 A1**
(43) Veröffentlichungstag der Anmeldung: **23.06.2021**
(21) Anmeldenummer: 20213656.0
(22) Anmeldetag: 14.12.2020
(51) Int. Cl.: H02K 5/20, H02K 9/19

(54) **STATORGEHÄUSE FÜR EINE ELEKTRISCHE MASCHINE, ELEKTRISCHE MASCHINE UND FAHRZEUG**

(30) Priorität: 19.12.2019 DE 102019135139
(71) Anmelder: Valeo Siemens eAutomotive Germany GmbH, 91056 Erlangen (DE)
(72) Erfinder: SÖNTGERATH, Philipp, 41372 Niederkrüchten (DE); KRAIS, Nils, 97618 Strahlungen (DE)
(74) Vertreter: Dr. Gassner & Partner mbB

(57) **Zusammenfassung**

Statorgehäuse (2) für eine elektrische Maschine (1), umfassend ein äußeres Gehäuseelement (7) und ein inneres Gehäuseelement (8), welches innerhalb des äußeren Gehäuseelements (7) angeordnet ist, wobei eine im inneren Gehäuseelement (8) und/oder im äußeren Gehäuseelement (7) ausgebildete Kavität (9) einen Kühlkanal (10) zwischen einem Einlass (11) des Statorgehäuses (2) und einem Auslass (12) des Statorgehäuses (2) für ein Kühlfluid ausbildet, wobei ein Spalt (14) zwischen den Gehäuseelementen (7, 8), der eine geringere radiale Erstreckung als der Kühlkanal (10) aufweist, eine fluidleitende Verbindung zwischen dem Einlass (11) und der Auslass (12) ausbildet, wobei sich der Spalt (14) in Umfangsrichtung entlang eines radialen Vorsprungs (16) eines ersten Gehäuseelements (8) der Gehäuseelemente (7, 8) erstreckt, welcher in eine Ausnehmung (17) eines zweiten Gehäuseelements (7) der Gehäuseelemente (7, 8) eingreift.

## Beschreibung

Die vorliegende Erfindung betrifft ein Statorgehäuse für eine elektrische Maschine, umfassend ein äußeres Gehäuseelement und ein inneres Gehäuseelement, welches innerhalb des äußeren Gehäuseelements angeordnet ist, wobei eine im inneren Gehäuseelement und/oder im äußeren Gehäuseelement ausgebildete Kavität einen Kühlkanal zwischen einem Einlass des Statorgehäuses und einem Auslass des Statorgehäuses für ein Kühlfluid ausbildet, wobei ein Spalt zwischen den Gehäuseelementen, der eine geringere radiale Erstreckung als der Kühlkanal aufweist, eine fluidleitende Verbindung zwischen dem Einlass und dem Auslass ausbildet.

Daneben betrifft die Erfindung eine elektrische Maschine und ein Fahrzeug.

Elektrische Maschinen erwärmen sich während ihres Betriebs aufgrund elektrischer Verluste in Wicklungen ihres Stators. Eine unzulässig hohe Erwärmung kann zu einem thermischen Fehler der Wicklung führen. Um die Ausnutzung der elektrischen Maschine, insbesondere bei einem Einsatz als Antriebsmaschine in einem Fahrzeug, zu erhöhen, ist es bekannt, ein Statorgehäuse mit zwei ineinander angeordneten Gehäuseelementen vorzusehen, zwischen den eine Kavität einen Kühlkanal ausbildet. Dies wird auch als Kühlmantel bezeichnet.

Ein solches Statorgehäuse ist beispielsweise aus dem Dokument WO 2006/106086 A1 bekannt, welches eine elektrische Maschine mit einem in einem Gehäuse angeordneten Stator offenbart. Das Gehäuse weist Mittel zur Flüssigkeitskühlung des Stators auf, wobei das Gehäuse aus zwei Flanschen und einen dazwischen angeordneten mittleren Gehäuseabschnitt besteht. Der mittlere Gehäuseabschnitt weist zwei koaxial ineinander angeordnete hülsenförmige Elemente auf, die zusammengesteckt einen Kühlmantel des Stators bilden. In einem Bereich zwischen den Elementen sind Stege vorhanden, die einstückig mit dem einen oder dem anderen Element verbunden sind. Dabei sind ein Einlass und ein Auslass vorgesehen, sodass eine Kühlflüssigkeit durch Eintritt und mäanderförmigen Verlauf über Kühlkanäle die gesamte Umfangsfläche der elektrischen Maschine überstreicht und am Auslass austritt.

Bei derartigen Statorgehäusen besteht aufgrund von Fertigungstoleranzen ein Spalt zwischen den Gehäuseelementen. Der Spalt stellt neben dem Kühlkanal eine fluidleitende Verbindung zwischen dem Einlass und dem Auslass her. Je größer der Spalt ist, umso stärker erwärmt sich die elektrische Maschine in ihrem Betrieb. Es wurde bereits vorgeschlagen, den Spalt durch eine weitere Verringerung der Fertigungstoleranzen zu verkleinern. Dies ist jedoch fertigungstechnisch sehr aufwendig und sehr kostspielig.

Der Erfindung liegt mithin die Aufgabe zugrunde eine verbesserte Möglichkeit zur Abdichtung eines Spalts zwischen einem Einlass und einen Auslass eines durch zwei ineinander angeordnete Gehäuseelemente ausgebildeten Statorgehäuses anzugeben.

Zur Lösung dieser Aufgabe wird erfindungsgemäß bei einem Statorgehäuse der eingangs genannten Art vorgeschlagen, dass sich der Spalt in Umfangsrichtung entlang eines radialen Vorsprungs eines ersten Gehäuseelements der Gehäuseelemente erstreckt, welcher in eine Ausnehmung eines zweiten Gehäuseelements der Gehäuseelemente eingreift.

Die Erfindung beruht auf der Überlegung, durch den Vorsprung sowohl eine Verlängerung eines unerwünschten Flussweges des Kühlfluids zwischen dem Einlass und dem Auslass durch den Spalt zu realisieren, als auch durch eine Umlenkung des Flussweges einen Strömungswiderstand entlang des unerwünschten Flussweges zu erhöhen, wobei ein Strömungswiderstand vom Einlass zum Auslass entlang des Kühlkanals im Wesentlichen unangetastet bleibt. Dadurch wird eine mittlere Strömungsgeschwindigkeit entlang des Spalts verringert, sodass eine geringere Menge des Kühlfluids durch den Spalt am Kühlkanal vorbeifließt. Das erfindungsgemäße Konzept kann somit auch als hydraulische Dichtung bezeichnet werden.

Durch das erfindungsgemäße Statorgehäuse kann mithin eine verbesserte Entwärmung des Stators realisiert werden, da eine geringere Menge des Kühlfluids, das entlang des Spalts vom Einlass zum Auslass fließt, der Entwärmung entlang des Kühlkanals entzogen wird. Gleichzeitig bedarf es keiner Verringerung von Fertigungstoleranzen der Gehäuseelemente, sodass sich das Statorgehäuse ohne hohen zusätzlichen Aufwand bzw. ohne hohe zusätzliche Kosten fertigen lässt.

Der Kühlkanal weist typischerweise eine radial innere Grenzfläche, die durch das innere Gehäuseelement ausgebildet ist, und eine radial äußere Grenzfläche auf, die durch das äußere Gehäuseelement ausgebildet ist. Grenzflächen des Kühlkanals in Umfangsrichtung sind typischerweise durch axiale Stege des inneren Gehäuseelements und/oder des äußeren Gehäuseelements realisiert. Zweckmäßigerweise ist der Vorsprung an einem sich vollständig entlang der Axialrichtung erstreckenden Steg zwischen dem Einlass und dem Auslass ausgebildet. Typischerweise ist der Vorsprung in einem bezüglich der Umfangsrichtung kurzen Abschnitt zwischen dem Einlass und dem Auslass vorgesehen. Allgemein kann bei dem erfindungsgemäßen Statorgehäuse vorgesehen sein, dass der Kühlkanal eine fluidleitende Verbindung zwischen dem Einlass und dem Auslass entlang einer Raumrichtung mit einer vorgegebenen Orientierung ausbildet, die einer Orientierung der durch den Spalt ausgebildeten fluidleitenden Verbindung entgegengesetzt ist.

Es wird bei dem erfindungsgemäßen Statorgehäuse bevorzugt, wenn sich der Spalt in Umfangsrichtung entlang eines, vorzugsweise auslassseitig bezüglich des ersten Vorsprungs angeordneten, radialen zweiten Vorsprungs des zweiten Gehäuseelements erstreckt, welcher in eine Ausnehmung des ersten Gehäuseelements eingreift. So kann eine zusätzliche Verlängerung des unerwünschten Flussweges und eine zusätzliche Erhöhung des Strömungswiderstands realisiert werden.

Zur weiteren Verlängerung des Flusswegs kann vorgesehen sein, dass sich der Spalt in Umfangsrichtung entlang eines, vorzugsweise auslassseitig bezüglich des zweiten Vorsprungs angeordneten, radialen dritten Vorsprungs des ersten Gehäuseelements erstreckt, welcher in eine zweite Ausnehmung des zweiten Gehäuseelements eingreift.

Mit Vorteil vorgesehen sein, dass sich der erste Vorsprung und/oder der dritte Vorsprung zum zweiten Gehäuseelement hin verjüngt. Alternativ oder zusätzlich kann vorgesehen sein, dass sich der zweite Vorsprung zum ersten Gehäuseelement hin verjüngt. Eine jeweilige Verjüngung ist insbesondere im Hinblick auf eine Fertigung der Gehäuseelemente als Gussteile vorteilhaft, weil so eine Lunkerneigung im Bereich des Vorsprungs reduziert wird und die Gussteile leicht entformbar sind. Selbstverständlich kann auch die oder eine jeweilige Ausnehmung, in welche der oder ein jeweiliger Vorsprung eingreift, verjüngt ausgebildet sein.

In vorteilhafter Ausgestaltung ist ferner vorgesehen, dass der zweite Vorsprung eine größere radiale Erstreckung als der erste Vorsprung und/oder der dritte Vorsprung aufweist.

Vorzugsweise ist bei dem erfindungsgemäßen Statorgehäuse vorgesehen, dass sich der oder ein jeweiliger Vorsprung entlang einer Axialrichtung erstreckt.

Obwohl es grundsätzlich möglich ist, dass das erste Gehäuseelement das äußere Gehäuseelement ist uns zweite Gehäuseelement das innere Gehäuseelement ist, wird es bevorzugt, wenn das erste Gehäuseelement das innere Gehäuseelement ist und das zweite Gehäuseelement das äußere Gehäuseelement ist.

Bei dem erfindungsgemäßen Statorgehäuse verläuft der Kühlkanal bevorzugt mäanderförmig. So kann eine möglichst großflächige Entwärmung des Stators realisiert werden.

Insbesondere ist beim erfindungsgemäßen Statorgehäuse vorgesehen, dass der Kühlkanal Hauptabschnitte, die eine axiale Flussrichtung des Kühlfluids vorgeben, und ein jeweiliges Paar von benachbarten Hauptabschnitten verbindende Umlenkabschnitte aufweist, welche eine Orientierung des Kühlfluid von einem Hauptabschnitt des Paars gegenüber dem anderen Hauptabschnitt des Paars umkehren.

Um eine gute Abdichtung in axialer Richtung zu erzielen wird es bevorzugt, wenn das innere Gehäuseelement an einer seiner Stirnseiten einen sich radial nach außen erstrecken Kragen aufweist und/oder das äußere Gehäuseelement an einer seiner Stirnseiten einen sich radial nach innen erstreckenden Kragen aufweist. Dabei wird es bevorzugt, wenn sich der oder ein jeweiliger Kragen radial weiter erstreckt als der oder ein jeweiliger Vorsprung. Es ist zweckmäßig, wenn die Krägen an unterschiedlichen Stirnseiten vorgesehen sind.

Die der Erfindung zugrunde liegende Aufgabe wird ferner gelöst durch eine elektrische Maschine, umfassend ein erfindungsgemäßes Statorgehäuse und einen innerhalb des inneren Gehäuseelements angeordneten Stator.

Die elektrische Maschine weiß typischerweise auch einen drehbar innerhalb des Stators gelagerten Rotor auf.

Die der Erfindung zugrunde liegende Aufgabe wird außerdem durch ein Fahrzeug gelöst, umfassend eine erfindungsgemäße elektrische Maschine, wobei die elektrische Maschine dazu eingerichtet ist, das Fahrzeug anzutreiben. Bei dem Fahrzeug kann es sich beispielsweise um ein Elektrofahrzeug (BEV) oder um ein Hybridfahrzeug handeln.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine Querschnittsansicht eines Ausführungsbeispiels der erfindungsgemäßen elektrischen Maschine;
- Fig. 2: eine perspektivische Ansicht eines ersten Ausführungsbeispiels des erfindungsgemäßen Statorgehäuses;
- Fig. 3: eine geschnittene Detailansicht des Statorgehäuses gemäß dem ersten Ausführungsbeispiel;
- Fig. 4: eine perspektivische Detailansicht des inneren Gehäuseelements gemäß dem ersten Ausführungsbeispiel;
- Fig. 5: eine perspektivische Detailansicht des äußeren Gehäuseelements gemäß dem ersten Ausführungsbeispiel;
- Fig. 6: eine geschnittene Detailansicht eines zweiten Ausführungsbeispiels des erfindungsgemäßen Statorgehäuses; und
- Fig. 7: eine Prinzipskizze eines Ausführungsbeispiels des erfindungsgemäßen Fahrzeugs.

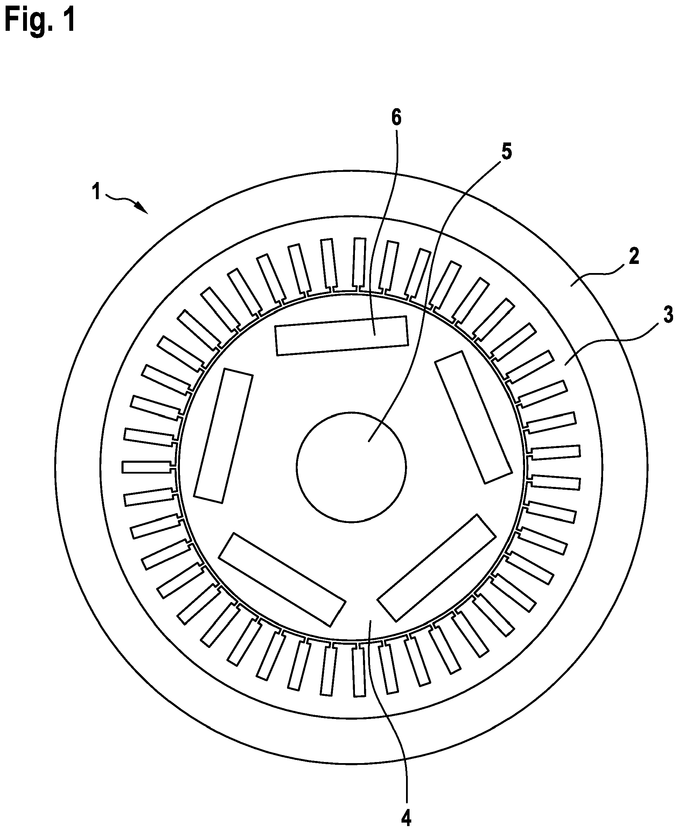

Fig. 1 ist eine Querschnittsansicht eines Ausführungsbeispiels einer elektrischen Maschine 1.

Die elektrische Maschine 1 umfasst ein Statorgehäuse 2, einen Stator 3, der beispielsweise mittels eines Presssitzes mit dem Statorgehäuse 2 verbunden ist, einen Rotor 4, der drehbar innerhalb des Stators 3 angeordnet ist, und eine Welle 5, an welcher der Rotor 4 befestigt ist. Exemplarisch umfasst der Rotor 4 mehrere Permanentmagnete 6. Das Statorgehäuse 2 entspricht einem der im Folgenden beschriebenen Ausführungsbeispiele.

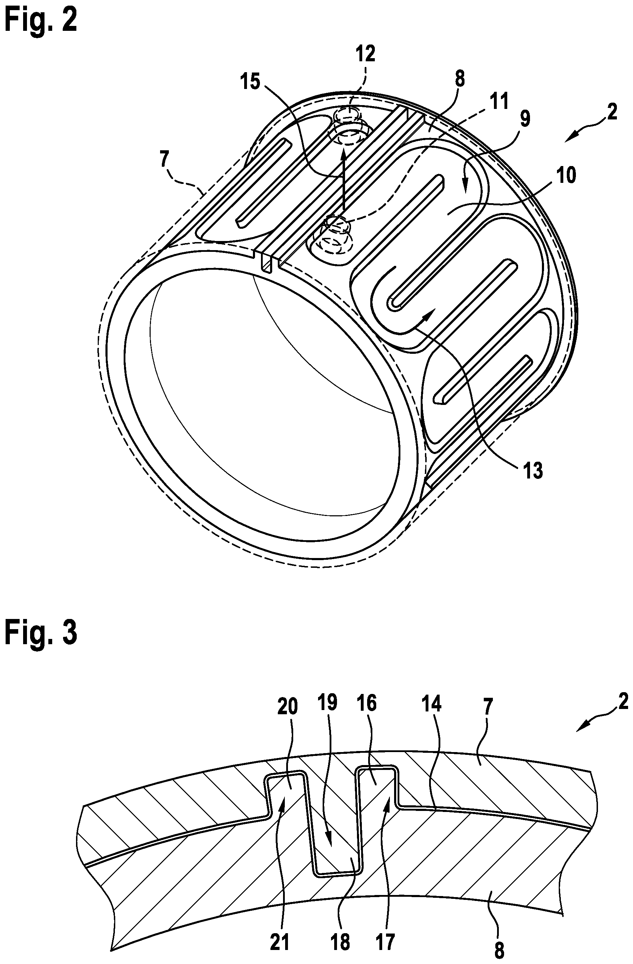

Fig. 2 ist eine perspektivische Ansicht eines Statorgehäuses 2 gemäß einem ersten Ausführungsbeispiel.

Der Statorgehäuse 2 umfasst ein äußeres Gehäuseelement 7 und ein inneres Gehäuseelement 8, welches innerhalb des äußeren Gehäuseelements 7 angeordnet ist. Im inneren Gehäuseelement 8 ist eine Kavität 9 ausgebildet, die einen mäanderförmigen Kühlkanal 10 zwischen einem Einlass 11 und einem Auslass 12 für ein Kühlfluid ausbildet. Im vorliegenden Ausführungsbeispiel sind der Einlass 11 und der Auslass 12 am äußeren Gehäuseelement 7 ausgebildet. Ein Pfeil 13 verdeutlicht einen Hauptflussweg des Kühlfluids entlang des Kühlkanals 10.

Fig. 3 ist eine geschnittene Detailansicht des Statorgehäuses 2 gemäß dem ersten Ausführungsbeispiel.

Zwischen den Gehäuseelementen 7, 8 ist aufgrund von Fertigungstoleranzen einen Spalt 14 ausgebildet, der eine wesentlich geringere radiale Erstreckung als der Kühlkanal 10 (siehe Fig. 2) aufweist. Durch diesen Spalt 14 ist eine fluidleitende Verbindung zwischen dem Einlass 11 und dem Auslass 12 (siehe Fig. 2) ausgebildet. Dieser Spalt 14 stellt einen dem Grunde nach unerwünschten, in Fig. 2 durch einen Pfeil 15 dargestellten, Flussweg zwischen dem Einlass 11 und dem Auslass 12 dar, welcher dem Hauptweg entgegengesetzt ist.

Wie Fig. 3 zu entnehmen ist, erstreckt sich der Spalt 14 in Umfangsrichtung entlang eines radialen Vorsprungs 16 eines ersten Gehäuseelements der Gehäuseelemente 7, 8, welches vorliegend das innere Gehäuseelement 8 ist. Der Vorsprung 16 greift dabei in eine Ausnehmung 17 eines zweiten Gehäuseelements der Gehäuseelemente 7, 8 ein, welches vorliegend das äußere Gehäuseelement 7 ist. Der Spalt 14 erstreckt sich ferner entlang eines auslassseitig bezüglich des ersten Vorsprungs 16 angeordneten radialen zweiten Vorsprungs 18 des zweiten Gehäuseelements 7, welcher in eine Ausnehmung 19 des ersten Gehäuseelements 8 eingreift, und entlang eines auslassseitig bezüglich des zweiten Vorsprungs 18 angeordneten radialen dritten Vorsprungs 20 des ersten Gehäuseelements 8, welcher in eine zweite Ausnehmung 21 des zweiten Gehäuseelement 7 eingreift. Die Vorsprünge 16, 18, 20 verlängern dabei den unerwünschten Flussweg und erhöhen so seinen Strömungswiderstand. Eine so erzielte Verringerung eines Volumenstroms entlang des unerwünschten Flussweges kann auch als hydraulische Dichtung aufgefasst werden.

Die Vorsprünge 16, 18, 20 sind zum jeweiligen Gehäuseelement 7, 8, in das sie eingreifen, hin verjüngt. Die Ausnehmungen 17, 19, 20 sind korrespondierend verjüngt, wobei eine Breite des Spalts 14 im Wesentlichen unverändert bleibt. Dies erleichtert im Hinblick auf eine Fertigung der Gehäuseelemente 7, 8 durch ein Gussverfahren die Entformung eines jeweiligen Gussteils und verringert eine Lunkerneigung. Ersichtlich weist der zweite Vorsprung 18 eine größere radiale Erstreckung als die Vorsprünge 16, 20 auf.

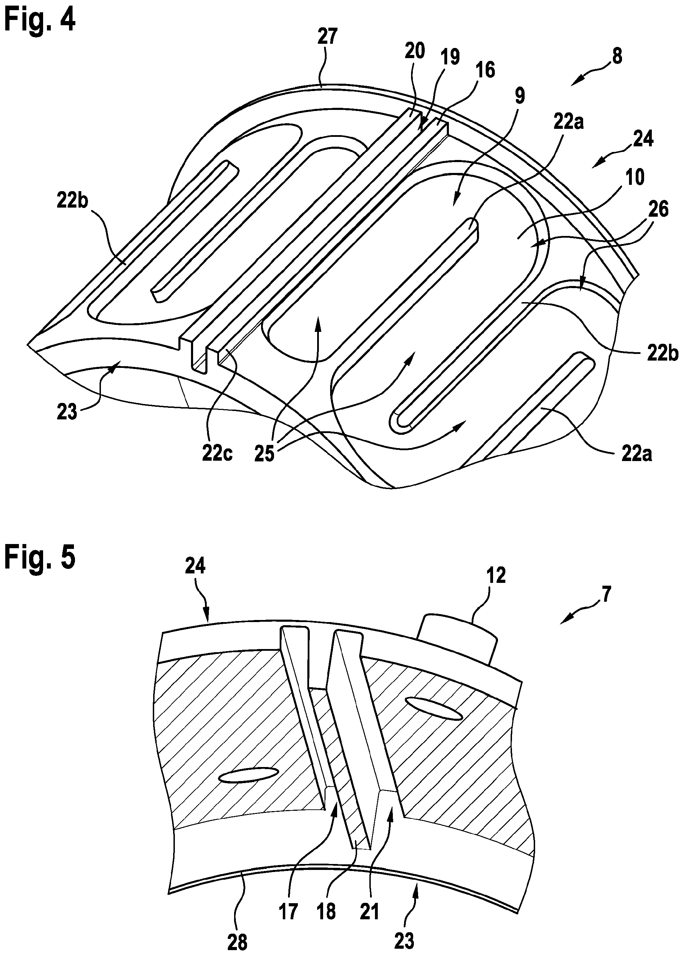

Fig. 4 ist eine perspektivische Detailansicht des inneren Gehäuseelements 8 gemäß dem ersten Ausführungsbeispiel.

Das innere Gehäuseelement 8 weist infolge der Ausbildung der Kavität 9 axiale Stege 22a, 22b auf, wobei sich die Stege 22a von einer ersten Stirnseite 23 unvollständig in der Axialrichtung zu einer zweiten Stirnseite 24 hin erstrecken und sich die Stege 22b von der zweiten Stirnseite 24 unvollständig in der Axialrichtung zur ersten Stirnseite 23 hin erstrecken. Die Stege 22a, 22b sind abwechselnd in Umfangsrichtung angeordnet. An einem sich vollständig zwischen den Stirnseiten 23, 24 erstreckenden Steg 22c sind die Vorsprünge 16, 20 und die Ausnehmung 19 ausgebildet.

Durch die Kavität 9 bzw. die Stege 22a, 22b, 22c weist der Kühlkanal 10 axiale Hauptabschnitte 25 sowie ein jeweiliges Paar benachbarter Hauptabschnitte 25 verbindende Umlenkabschnitte 26 auf, welche die Orientierung des Kühlfluids eines Hauptabschnitts 25 des Paars gegenüber dem anderen Hauptabschnitt 25 des Paars umkehren.

An der zweiten Stirnseite 24 ein sich radial nach außen erstreckender Kragen 27 ausgebildet, welcher das Statorgehäuse 2 axial an der zweiten Stirnseite 24 abschließt.

Fig. 5 ist eine perspektivische Detailansicht des äußeren Gehäuseelements 7 gemäß dem ersten Ausführungsbeispiel.

Zu erkennen ist neben dem Vorsprung 18 und den Ausnehmungen 17, 21 ein weiterer Kragen 28, der sich an der ersten Stirnseite 23 radial nach innen erstreckt. Der Kragen 28 schließt das Statorgehäuse 2 axial auf der ersten Stirnseite 23 ab. Die Krägen 27, 28 erstrecken sich dabei radial weiter nach innen bzw. nach außen als die Vorsprünge 16, 18, 20.

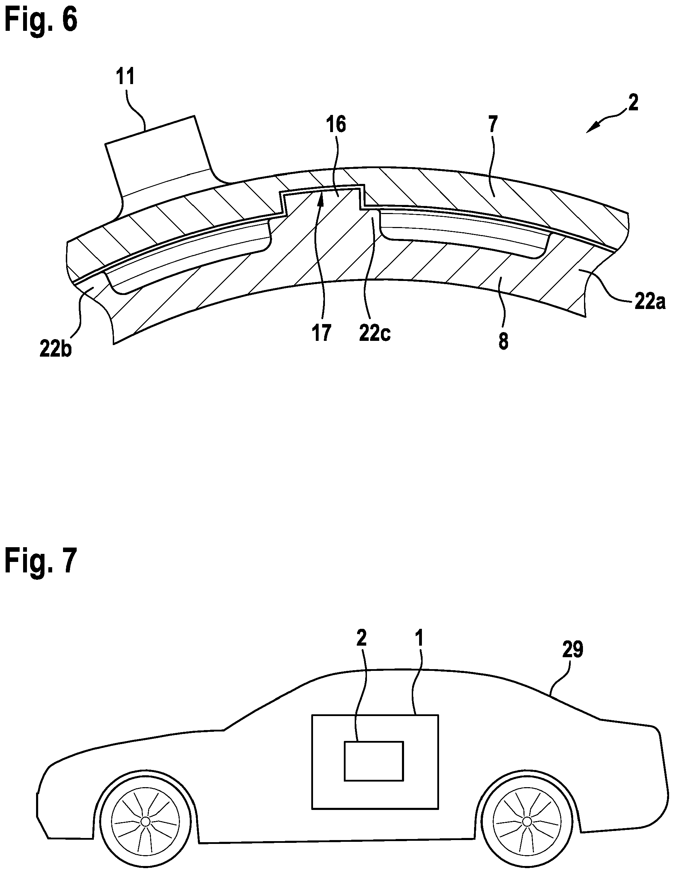

Fig. 6 ist eine geschnittene Detailansicht eines Statorgehäuses 2 gemäß einem zweiten Ausführungsbeispiel. Dabei gelten sämtliche Ausführungen zum ersten Ausführungsbeispiel bis auf die im Folgenden beschriebenen Abweichung für das zweite Ausführungsbeispiel. Gleiche oder gleichwirkende Komponenten sind mit identischen Bezugszeichen versehen.

Beim zweiten Ausführungsbeispiel ist lediglich ein Vorsprung 16 auf dem Steg 22c des ersten Gehäuseelements 8 vorgesehen, der wiederum in eine einzige Ausnehmung 17 des zweiten Gehäuseelements 7 eingreift. In diesem Ausführungsbeispiel weisen sowohl der Vorsprung 16 als auch die Ausnehmungen 17 keine Verjüngung, sondern radiale Flanken, auf.

Im Folgenden werden Simulationsergebnisse eines Betriebs einer elektrischen Maschine 1 mit einem Statorgehäuse 2 gemäß dem zweiten Ausführungsbeispiel im Vergleich zu einem herkömmlichen Statorgehäuse ohne den Vorsprung 16 und die Ausnehmung 17 dargestellt. Der Simulation wurde eine Breite des Spalts 14 von 0,8 mm, ein Volumenstrom von 10 l·min⁻¹ und eine Temperatur am Einlass 11 von 65 °C zugrunde gelegt. Die folgende Tabelle zeigt dazu Simulationsergebnisse für eine Maximaltemperatur und eine Durchschnittstemperatur am inneren Gehäuseelement 8, für eine maximale Temperatur und eine Durchschnittstemperatur an einem Presssitz zwischen Statorgehäuse 2 und dem Stator 3 sowie einen Druckabfall zwischen dem Einlass 11 und dem Auslass 12.

| | Herkömmliches Statorgehäuse | Statorgehäuse gemäß dem zweiten Ausführungsbeispiel |
|---|---|---|
| Maximaltemperatur | 94,78 °C | 88,66 °C |
| Durchschnittstemperatur am inneren Gehäuseelement | 81,35 °C | 77,80 °C |
| Maximaltemperatur | 94,89 °C | 88,66 °C |
| Durchschnittstemperatur am Presssitz | 86,19 °C | 82,22 °C |
| Druckabfall | 1,19 kPa | 2,73 kPa |

Wie den vorliegenden Simulationsergebnissen zu entnehmen ist, kann eine signifikante Reduktion der jeweiligen Temperaturen erzielt werden. Dies gilt insbesondere für Temperaturen lokaler Hotspots, die durch die Maximaltemperaturen beschrieben werden. Der erhöhte Druckabfall resultiert dabei einerseits daraus, dass der Strömungswiderstand im erwünschten Hauptflussweg im Wesentlichen unverändert bleibt, und andererseits daraus, dass der Strömungswiderstands im unerwünschten Flussweg durch die hydraulische Dichtung ganz erheblich erhöht wird.

Fig. 7 ist eine Prinzipskizze eines Ausführungsbeispiels eines Fahrzeugs 29, umfassend die elektrische Maschine 1 mit einem Statorgehäuse 2 gemäß einem der zuvor beschriebenen Ausführungsbeispiele. Dabei ist die elektrische Maschine 1 dazu eingerichtet, das Fahrzeug 29 anzutreiben. Bei diesem handelt es sich mithin um ein Elektrofahrzeug (BEV) oder um ein Hybridfahrzeug.

## Patentansprüche

1. Statorgehäuse (2) für eine elektrische Maschine (1), umfassend ein äußeres Gehäuseelement (7) und ein inneres Gehäuseelement (8), welches innerhalb des äußeren Gehäuseelements (7) angeordnet ist, wobei eine im inneren Gehäuseelement (8) und/oder im äußeren Gehäuseelement (7) ausgebildete Kavität (9) einen Kühlkanal (10) zwischen einem Einlass (11) des Statorgehäuses (2) und einem Auslass (12) des Statorgehäuses (2) für ein Kühlfluid ausbildet, wobei ein Spalt (14) zwischen den Gehäuseelementen (7, 8), der eine geringere radiale Erstreckung als der Kühlkanal (10) aufweist, eine fluidleitende Verbindung zwischen dem Einlass (11) und der Auslass (12) ausbildet,
**dadurch gekennzeichnet,**
**dass** sich der Spalt (14) in Umfangsrichtung entlang eines radialen Vorsprungs (16) eines ersten Gehäuseelements (8) der Gehäuseelemente (7, 8) erstreckt, welcher in eine Ausnehmung (17) eines zweiten Gehäuseelements (7) der Gehäuseelemente (7, 8) eingreift.

2. Statorgehäuse nach Anspruch 1, wobei
sich der Vorsprung (16) zum zweiten Gehäuseelement (7) hin verjüngt.

3. Statorgehäuse nach Anspruch 1 oder 2, wobei
sich der Spalt (14) in Umfangsrichtung entlang eines radialen zweiten Vorsprungs (18) des zweiten Gehäuseelements (7) erstreckt, welcher in eine Ausnehmung (19) des ersten Gehäuseelements (8) eingreift.

4. Statorgehäuse nach Anspruch 3, wobei
sich der zweite Vorsprung (18) zum ersten Gehäuseelement (8) hin verjüngt.

5. Statorgehäuse nach Anspruch 3 oder 4, wobei
der zweite Vorsprung (18) eine größere radiale Erstreckung als der erste Vorsprung (16) aufweist.

6. Statorgehäuse nach einem der vorhergehenden Ansprüche, wobei sich der Spalt (14) in Umfangsrichtung entlang eines radialen dritten Vorsprungs (20) des ersten Gehäuseelements (8) erstreckt, welcher in eine zweite Ausnehmung (21) des zweiten Gehäuseelements (7) eingreift.

7. Statorgehäuse nach Anspruch 5, wobei
sich der dritte Vorsprung (20) zum zweiten Gehäuseelement (7) hin verjüngt.

8. Statorgehäuse nach einem der vorhergehenden Ansprüche, wobei sich der oder ein jeweiliger Vorsprung (16, 18, 20) entlang einer Axialrichtung erstreckt.

9. Statorgehäuse nach einem der vorhergehenden Ansprüche, wobei das erste Gehäuseelement (8) das innere Gehäuseelement (8) ist und das zweite Gehäuseelement (7) das äußere Gehäuseelement (7) ist.

10. Statorgehäuse nach einem der vorhergehenden Ansprüche, wobei der Kühlkanal (10) mäanderförmig verläuft.

11. Statorgehäuse nach einem der vorhergehenden Ansprüche, wobei der Kühlkanal Hauptabschnitte (25), die eine axiale Flussrichtung des Kühlfluids vorgeben, und ein jeweiliges Paar von benachbarten Hauptabschnitten (25) verbindende Umlenkabschnitte (26) aufweist, welche eine Orientierung des Kühlfluid von einem Hauptabschnitt (25) des Paars gegenüber dem anderen Hauptabschnitt (25) des Paars umkehren.

12. Statorgehäuse nach einem der vorhergehenden Ansprüche, wobei das innere Gehäuseelement (8) an einer seiner Stirnseiten (24) einen sich radial nach außen erstrecken Kragen (27) aufweist und/oder das äußere Gehäuseelement (7) an einer seiner Stirnseiten (23) einen sich radial nach innen erstreckenden Kragen (28) aufweist.

13. Statorgehäuse nach Anspruch 12, wobei
sich der oder ein jeweiliger Kragen (27, 28) radial weiter erstreckt als der oder ein jeweiliger Vorsprung (16, 18, 20).

14. Elektrische Maschine (1), umfassend ein Statorgehäuse (2) nach einem der vorhergehenden Ansprüche und einen innerhalb des inneren Gehäuseelements (8) angeordneten Stator (3).

15. Fahrzeug (29), umfassend eine elektrische Maschine (1) nach Anspruch 14, wobei die elektrische Maschine (1) dazu eingerichtet ist, das Fahrzeug (29) anzutreiben.
